# EUROPÄISCHE PATENTSCHRIFT

(11) **EP 1 294 603 B1**
(45) Veröffentlichungstag und Bekanntmachung des Hinweises auf die Patenterteilung: **19.01.2005**
(21) Anmeldenummer: 01947396.6
(22) Anmeldetag: 25.06.2001
(51) Int. Cl.: B61B 10/02, B65G 23/16

(54) **FÖRDEREINRICHTUNG, INSBESONDERE HÄNGEFÖRDEREINRICHTUNG**
CONVEYOR DEVICE, ESPECIALLY SUSPENDED CONVEYOR DEVICE
DISPOSITIF DE TRANSPORT, EN PARTICULIER DISPOSITIF DE TRANSPORT SUSPENDU

(30) Priorität: 26.06.2000 DE 10031033
(43) Veröffentlichungstag der Anmeldung: 26.03.2003
(73) Patentinhaber: WF Logistik GmbH, 86899 Landsberg (DE)
(72) Erfinder: BRAUNMÜLLER, Walter, 86916 Kaufering (DE); LUTSCH, Wilhelm, 86899 Landsberg (DE)
(74) Vertreter: Tiesmeyer, Johannes, Dipl.-Phys. Dr.
(86) Internationale Anmeldenummer: PCT/EP2001/007192
(87) Internationale Veröffentlichungsnummer: WO 2002/000484

(56) Entgegenhaltungen:
- DE-A- 2 523 060
- DE-A- 4 017 821
- DE-A- 19 834 451
- DE-U- 9 206 550
- US-A- 2 973 721
- US-A- 3 795 200
- US-A- 4 250 988
- US-A- 5 231 932

## Beschreibung

Die Erfindung betrifft eine Fördereinrichtung, insbesondere Hängefördereinrichtung, mit Schienen zur Führung von mit Laufrollen ausgestatteten Fördergutträgern längs einer Förderstrecke, mit einem um Umlenkmittel umlaufend angetriebenen und zumindest bereichsweise mittels einer Führungseinrichtung längs der Förderstrecke geführten Antriebsband mit daran angeordneten und in einer Mitnahmebereitschaftsposition zur Mitnahme von schienengeführten Fördergutträgern längs der Förderstrecke geeigneten und vorgesehenen Mitnehmerelementen und mit Mitteln zum Stoppen von Fördergutträgern in einem Staubereich der Förderstrecke bei weiterlaufendem Antriebsband, wobei die Fördereinrichtung gesteuert aktivierbare Positionsänderungsmittel zur Überführung von Mitnehmerelementen des Antriebsbandes aus ihrer Mitnahmebereitschaftsposition in eine Mitnahmeumgehungsposition im Staubereich aufweist, wobei die in der Mitnahmeumgehungsposition befindlichen Mitnehmerelemente mit gestauten Fördergutträgern nicht oder ggf. nur schwach und leicht nachgiebig in Eingriff kommen können,

Eine Einrichtung der vorstehend genannten Art ist z. B. in der DE 198 34 451 A1 offenbart. Diese bekannte Fördereinrichtung weist eine klappenartige Power-and-free-Mitnahmeeinrichtung auf. Anstelle der Power-and-free-Mitnahmeeinrichtung ist es gemäß der DE 198 34 451 A1 auch möglich, das Antriebsband mit Mitnehmerelementen in Form von Mitnahmebürsten auszurüsten. Eine solche Fördereinrichtung ist inherent staufähig.

Bei einer Hängefördereinrichtung gemäß der EP 0 516 971 B1 weisen die Fördergutträger zwei Laufrollen auf, die an den freien Schenkelenden eines V-förmigen oder U-förmigen Bügels drehbar angeordnet und schräg zueinander orientiert sind, so dass sie auf den Laufflächen einer satteldachförmigen Führungsschiene längs einer betreffenden Förderstrecke rollen können, wobei sich der Bügel unter der Laufschiene hindurch erstreckt. Als Antriebsband weist die bekannte Hängefördereinrichtung eine Laschenkette auf, die längs der Förderstrecke in einer Kettenführung geführt ist. Zur Ankopplung der Fördergutträger an die Antriebskette dienen Mitnehmerfinger, die in bestimmten Abständen an der Antriebskette vorgesehen sind, wobei die Mitnehmerfinger seitlich von der Antriebskette quer zur Laufrichtung der Fördergutträger abstehen und in den Weg der Fördergutträger hineinragen. Wird die Antriebskette nun zur Bewegung längs der Förderstrecke angetrieben, so kann ein jeweiliger Mitnehmerfinger einen etwaig auf der Führungsschiene vorhanden Fördergutträger beaufschlagen und längs der Förderstrecke schieben bzw. mitnehmen, wobei der Fördergutträger mit seinen Laufrollen an der Führungsschiene geführt ist. Bei den Mitnehmerfingern handelt es sich um jeweils einzelne, in sich elastische, nachgiebig auslenkbare Flachstabelemente aus Kunststoff, die über einen Bereich erhöhter Elastizität mit einem jeweiligen Mitnehmer-Halteteil der Antriebskette verbunden sind. Die Elastizität eines jeweiligen Mitnehmerfingers soll eine gewisse Dämpfung bei der Beaufschlagung des Fördergutträgers gewährleisten, wenn der Mitnehmerfinger auf einen starr am Fördergutträger vorgesehenen Anschlagbereich trifft. Darüber hinaus kann ein betreffender elastischer Mitnehmerfinger bei einem Stopp des Fördergutträgers bei weiterlaufender Antriebskette so weit ausgelenkt werden, dass er außer Eingriff mit dem Fördergutträger gelangt, so dass in einer Stausituation der Fördergutträger das Antriebsband weiterlaufen kann, ohne die betreffenden Fördergutträger oder Mitnehmerfinger zu zerstören. Allerdings erfährt ein gestoppter bzw. im Stau befindlicher Fördergutträger jedes Mal, wenn ein Mitnehmerfinger bei weiterlaufender Antriebskette vorbeikommt, einen Auftreffstoß. Dabei kann es zu unerwünschten Vibrationen, zu erhöhtem Verschleiß von Elementen der Fördereinrichtung und zu einer störenden Geräuschentwicklung kommen. Die vorstehend genannten nachteiligen Effekte sind auch nicht durch die Elastizität der Mitnehmerfinger zu unterdrücken.

Es sind weitere Hängefördereinrichtungen bekannt, bei denen an einem Antriebsband in Form einer Antriebskette Bürstenelemente in bestimmten Abständen voneinander angeordnet sind, wobei die Bürstenelemente als Mitnehmerelemente für den Antrieb von Fördergutträgern dienen. Wie im Falle des unter Bezugnahme auf die EP 0 516 971 B1 beschriebenen Mitnehmerfingers sollen auch die Borsten der Bürstenelemente eine Dämpfung bei der Beaufschlagung eines Fördergutträgers zur Mitnahme längs der Förderstrecke bewirken. Im Falle eines beabsichtigten oder unbeabsichtigten Stopps der Fördergutträger üben jedoch auch solche Bürstenelemente Auftreffstöße auf die Fördergutträger aus, so dass es zu entsprechenden Erschütterungen mit den bereits oben beschriebenen Nachteilen kommt.

In der deutschen Patentanmeldung 100 05 646 ist eine Hängefördereinrichtung mit Bürstenelementen an einer Antriebskette zur Mitnahme von Fördergutträgern beschrieben, wobei diese Fördereinrichtung die Besonderheit aufweist, dass die Fördergutträger schwenkbare Kopplungselemente zur Beaufschlagung durch die Bürstenelemente aufweisen. Bei Bildung eines Staus kommt es dazu, dass die Kopplungselemente der aufeinander auftreffenden Fördergutträger unter dem Staudruck in eine Passivstellung verschwenkt werden, in der sie von den Bürstenelementen der weiterlaufenden Antriebskette nicht in Eingriff genommen werden, so dass die oben erwähnten Auftreffstöße weitgehend vermieden werden.

Der Erfindung liegt die Aufgabe zugrunde, einen weiteren Weg aufzuzeigen, wie bei einer Fördereinrichtung der eingangs genannten Art eine Stoßbelastung der Fördergutträger im Falle eines Staus zumindest weitgehend vermieden werden kann, und insbesondere der Staudruck noch weiter verringert werden kann.

Zur Lösung dieser Aufgabe wird ausgehend von einer Fördereinrichtung mit den Eingangs genannten Merkmalen vorgeschlagen, dass die Positionsänderungsmittel steuerbare Mittel zur Änderung der Führungsbahn des Antriebsbandes aufweisen, die dazu eingerichtet sind, das Antriebsband in dem Staubereich der Förderstrecke wahlweise aus einer die Mitnehmerelemente in Mitnahmebereitschaftsposition führenden Bahn in eine die Mitnehmerelemente in Mitnahmeumgehungsposition führende Bahn umzulenken.

Die Erfindung ermöglicht es, das Antriebsband im Staubereich bedarfsweise umzulenken, so dass Mitnehmerelemente ohne wirksame Ineingriffnahme von gestauten Fördergutträgern den Staubereich längs der Förderstrecke passieren können. Gemäß einer Variante dieser Ausführungsform der Erfindung sind die Ablenkmittel so gestaltet, dass sie das Antriebsband durchgehend über nahezu die gesamte Länge des Staubereichs so weit von gestauten Fördergutträgern fernhalten, dass die Mitnehmerelemente im Staubereich die Fördergutträger nicht oder allenfalls nur schwach und nachgiebig beaufschlagen können. Zum Abbau eines Staus von Fördergutträgern sind die Ablenkmittel in der Weise steuerbar, dass sie das Antriebsband wieder so führen, dass Mitnehmerelemente Fördergutträger zur Mitnahme in Eingriff nehmen können.

Die in Mitnahmeumgehungsposition überführten Mitnehmerelemente werden im Staubereich an gestauten Fördergutträgern in der Weise vorbeigeführt, dass sie keine oder allenfalls äußerst schwache Auftreffstöße auf die Fördergutträger ausüben. Es ist somit ein die Fördereinrichtung schonender Staubetrieb bei weiterlaufendem Antriebsband möglich.

Gemäß einer weiteren Ausgestaltung der Erfindung ist es vorgesehen, dass die Mittel zur Änderung der Führungsbahn im Staubereich längs der Förderstrecke in der Weise angeordnet und aktivierbar sind, dass sie das Antriebsband an vorbestimmten Stellen der Förderstrecke in die die Mitnehmerelemente in Mitnahmeumgehungsposition führende Bahn umlenken, wobei diese vorbestimmten Stellen den Stellen entsprechen, in , denen bei Stau von Fördergutträgern die Fördergutträgerbereiche liegen, die zur Mitnahmekopplung zwischen Fördergutträgern und Antriebsband von den Mitnehmerelementen zu beaufschlagen sind. Nach Umgehung dieser Stellen wird das Antriebsband jeweils wieder entgegengesetzt umgelenkt und der normalen Führung längs der Förderstrecke überlassen. Bei einer solchen örtlich begrenzten Umleitung des Antriebsbandes umgehen die Mitnehmerelemente jeweils die Anschlagbereiche der Fördergutträger im Stau. Zur Auflösung eines Staus wird die Umlenkung des Antriebsbandes wieder rückgängig gemacht, so dass Mitnehmerelemente nunmehr die bisher gestauten Fördergutträger zur Mitnahme in Eingriff nehmen können. Die Mittel zur Änderung der Führungsbahn weisen gemäß einer Weiterbildung der letztgenannten Variante der Erfindung Ablenk-Führungselemente auf, die das Antriebsband lokal aus der die Mitnehmerelemente in Mitnahmebereitschaftsposition führenden Bahn in eine die Mitnehmerelemente in Mitnahmeumgehungsposition führende Bahn geführt ablenken, wobei die Ablenk-Führungselemente in einem jeweiligen Verschiebebereich längs der Förderstrecke gesteuert verschiebbar sind, um den jeweiligen Ort der Ablenkung des Antriebsbandes zu variieren. Die Ablenk-Führungselemente sind vorzugsweise jeweils zwischen zwei Endstellungen in Längsrichtung der Förderstrecke verschiebbar, wobei eine dieser Endstellungen einer Stellung der Umgehung eines Anschlagbereichs eines im Stau befindlichen Fördergutträgers entspricht, wohingegen die andere Endstellung so gewählt ist, dass die erwähnte Umgehung aufgehoben ist und die Mitnehmerelemente wieder mit den Anschlagbereichen der Fördergutträger in Eingriff treten können.

Die Erfindung betrifft in allen Ausgestaltungen vorzugsweise eine Hängefördereinrichtung mit Fördergutträgern, die wenigstens ein Laufwerk mit einem V-förmigen oder U-förmigen Bügel aufweisen, wobei an den freien Schenkelenden des Bügels Laufrollen drehbar angeordnet und schräg zueinander orientiert sind, so dass sie auf Laufflächen satteldachförmiger Führungsschienen längs einer betreffenden Förderstrecke rollen können, wobei sich der Bügel unter der Führungsschiene hindurcherstreckt. Vorzugsweise bestehen die hier betrachteten Fördergutträger aus wenigstens zwei Laufwerken der vorstehend genannten Art, die durch eine Tragstange für Fördergut an ihren unteren Enden miteinander verbunden sind, wobei die Fördergutträger vorzugsweise die gleichen Abmessungen und insbesondere an einer vorbestimmten Stelle ihrer Längserstreckung einen Anschlagbereich für Mitnehmerelemente des Antriebsbandes aufweisen. Gemäß einer bevorzugten Ausführungsform der Erfindung ist die Antriebsbandführung in Bezug auf die Erstreckung der Führungsschienen so ausgelegt, dass ein jeweiliges in Mitnahmebereitschaftsposition geführtes Mitnehmerelement einen jeweiligen schienengeführten Fördergutträger an dem Bügelschenkel eines Laufwerks zur Mitnahme längs der Förderstrecke hintergreifen kann.

Gemäß einer besonders bevorzugten Ausgestaltung der Erfindung in allen Ausführungsformen handelt es sich bei dem Antriebsband um eine Antriebskette, insbesondere Laschenkette, mit daran angeordneten Mitnehmerelementen. Die in Mitnahmebereitschaftsposition befindlichen Mitnehmerelemente stehen beispielsweise seitlich von der Antriebskette (Förderkette) ab, so dass sie in den Weg der schienengeführten Fördergutträger hineinreichen, um Fördergutträger in Eingriff nehmen zu können. Vorzugsweise handelt es sich bei den Mitnehmerelementen um elastisch nachgiebig auslenkbare Mitnehmerfinger. Diese sollen so beschaffen sein, dass sie nach Überwindung einer bestimmten Gegenkraft an einem beispielsweise außerhalb eines Staubereichs unbeabsichtigt blockierten Fördergutträger ausweichen und eine Ineingriffnahme des Fördergutträgers überwinden können, ohne spontane Beschädigungen hervorzurufen.

Die Mitnehmerfinger können gruppenweise zu Mitnehmerbürsten zusammengefasst sein, wobei die Mitnehmerbürstenelemente vorzugsweise äquidistant aufeinander folgend am Antriebsband angeordnet sind.

In einer alternativen Ausgestaltung könnte das Antriebsband kontinuierlich ohne Bildung größerer Abstände mit Mitnehmerborsten belegt sein.

Es kann vorgesehen sein, dass einzelne Mitnehmerelemente stets in Mitnahmebereitschaftsposition verbleiben.

Ausführungsbeispiele der Erfindung werden nachstehend unter Bezugnahme auf die Figuren näher erläutert.
- Fig. 1: zeigt eine teils im Querschnitt dargestellte Hängefördereinrichtung nach der Erfindung mit einem Fördergutträger in Rückansicht.
- Fig. 2: zeigt zwei in Stauposition benachbart aneinander anliegende Fördergutträger in einer perspektivischen Ansicht, wobei Antriebsmittel nicht dargestellt wurden.
- Fig. 3: zeigt in einer Draufsicht einen Abschnitt der Kettenführungseinrichtung einer Fördereinrichtung nach der Erfindung in teils schematisierter Darstellung.
- Fig. 4a: zeigt einen ein Ablenk-Führungselement umfassenden Bereich aus Fig. 3 in vergrößerter Darstellung.
- Fig. 4b: zeigt eine Darstellung entsprechend Fig. 4a, wobei jedoch das Ablenk-Führungselement in einer anderen Position gezeigt ist.

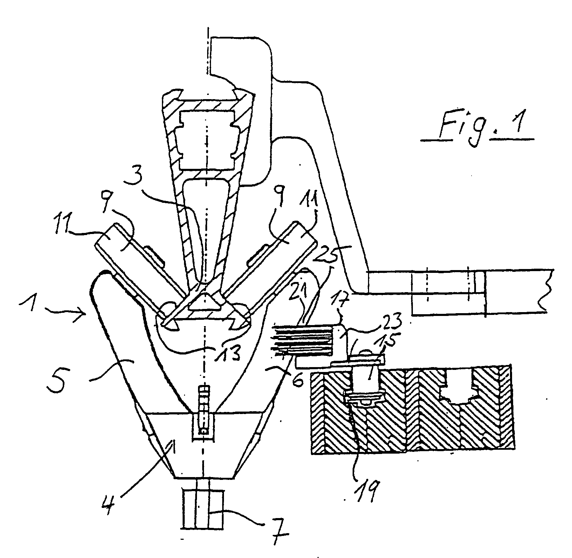

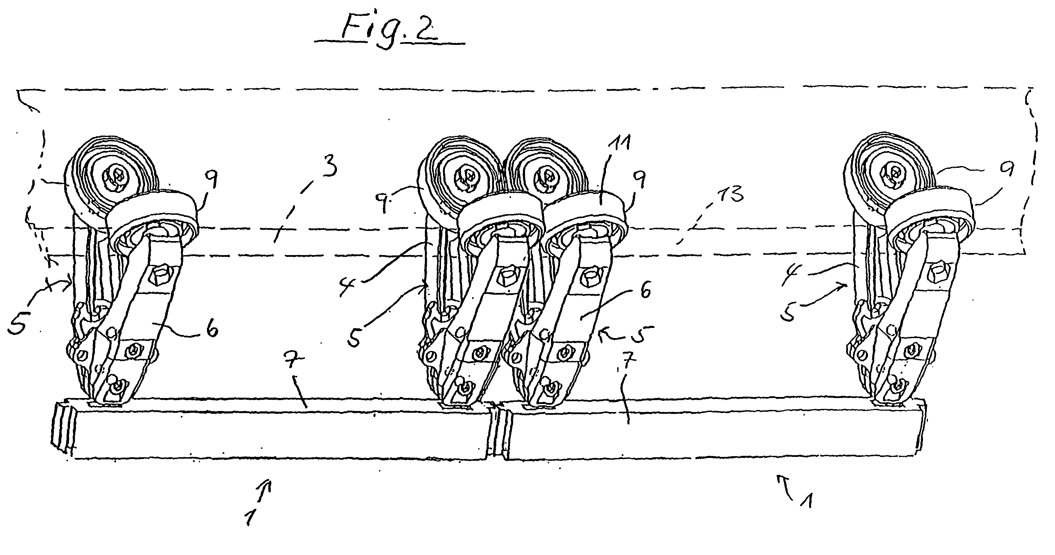

Fig. 1 zeigt einen Fördergutträger 1 in Rückansicht an einer Laufschiene 3, die im Querschnitt dargestellt ist. Der Fördergutträger 1 umfasst zwei Laufwerke 5, die an ihren unteren Enden durch eine gemeinsame Fördergut-Tragstange 7 (vgl. auch Fig. 2) miteinander verbunden sind. Von den an der Laufschiene 3 hintereinander liegenden Laufwerken 5 ist in der Ansicht gemäß Fig. 1 lediglich eines, nämlich das hintere Laufwerk 5 erkennbar. Die einander entsprechenden Laufwerke 5 weisen einen jeweiligen V-förmigen Bügel 4 auf, der sich in der bestimmungsgemäßen Förderposition an der Laufschiene 3 unter der Laufschiene 3 hinweg erstreckt, so dass die beiden an den Schenkelenden des Bügels 4 gelagerten und schräg zueinander orientierten Laufrollen 9 mit ihren Laufflächen 11 an den komplementären Führungsflächen 13 der Laufschiene 3 abrollen können. Jedes Laufwerk 5 ist somit vermittels der Laufrollen 9 hängend an der Laufschiene 3 abgestützt und längs einer dem Verlauf der Laufschiene 3 entsprechenden Förderstrecke verfahrbar, um Fördergut zu transportieren. Fördergutträger der in Fig. 1 und Fig. 2 gezeigten Art können beispielsweise in der Bekleidungsindustrie eingesetzt werden, um Kleidungsstücke an Kleiderbügeln zu transportieren, welche an der Tragstange 7 eines betreffenden Fördergutträgers 1 hängen.

Bei der Fördereinrichtung gemäß Fig. 1 ist als Antriebsmittel für Fördergutträger 1 ein Antriebsband in Form einer Förderkette oder Antriebskette 15 mit daran aufeinander folgend angeordneten Mitnehmerelementen in Form von Bürsten 17 vorgesehen. Die Kette 15 läuft normalerweise in einer Kettenführung 19 längs der Laufschiene 3 und wird als Endlosschleife von einem (nicht gezeigten) Antriebs-Zahnrad umlaufend angetrieben. Wie in Fig. 1 skizziert, stehen die Borsten 21 des Bürstenelementes 17 quer zur Laufrichtung des Fördergutträgers 1 im Bereich der Förderstrecke von dem Borstenträger 23 ab. Die Borstenträger 23 sind an der Antriebskette 15 befestigt. In Fig. 1 ist lediglich eines von mehreren in Abständen voneinander längs der Kette 15 vorgesehenen Bürstenelementen 17 erkennbar. Die Borsten 21 eines betreffenden Bürstenelementes 17 treten normalerweise mit einem Anschlagbereich 25 des Fördergutträgers 1 in Eingriff, um den Fördergutträger 1 bei laufender Antriebskette 15 längs der Förderstrecke mitzunehmen. Bei den Anschlagbereichen handelt es sich im Beispielsfall um einen rückseitigen Flächenbereich des Schenkels 6 des Laufwerkbügels 4. Sollte es zu einem unbeabsichtigten Blockieren eines Fördergutträgers 1 auf der Förderstrecke kommen, so können die Borsten 21 des Bürstenelementes 17 nach Überwindung einer Gegenkraft am Schenkel 6 ausweichen und an dem Bügel 4 vorbeischnappen. Insoweit sind Verhältnisse einer Sicherheitskupplung bezüglich der gegenseitigen Ineingriffnahme von Fördergutträger 1 und Mitnehmerelement 17 gegeben. Kommt es jedoch bei häufigeren Staus zu regelmäßigen Auftreffschlägen von Mitnehmerelementen 17 auf die Bügel 4 von Fördergutträgern 1, so sind Verschleißerscheinungen an den Fördergutträgern, an den Antriebsmitteln oder an der Führungsschiene auf Dauer nicht zu vermeiden. Ferner verursachen solche Auftreffschläge laute Betriebsgeräusche der Fördereinrichtung, was es zu vermeiden gilt.

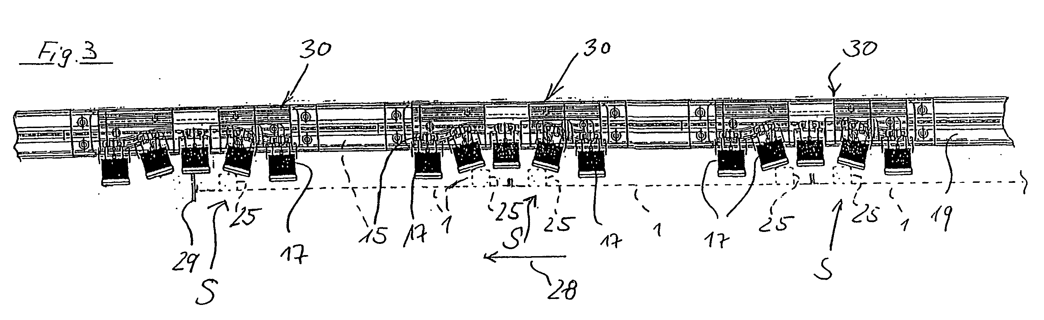

Fig. 3 zeigt in schematisierter Darstellung und in Draufsicht einen Abschnitt der Kettenführungseinrichtung einer Fördereinrichtung nach der Erfindung. Die Antriebskette 15 mit Bürstenelementen 17 ist in Fig. 3 nur abschnittsweise dargestellt, wenngleich die Kette 15 durchgehend verläuft und über ihre gesamte Kettenlänge mit vorzugsweise in im Wesentlichen gleichen Abständen angeordneten Bürstenelementen 17 ausgestattet ist.

In Fig. 3 sind Fördergutträger 1 schematisch mit unterbrochenen Linien angedeutet, wobei mit 25 Anschlagbereiche der Fördergutträger 1 für die Bürstenelemente 17 gekennzeichnet sind. Es sei vorausgesetzt, dass die Fördergutträger 1 in Fig. 3 an einer in Förderrichtung 28 verlaufenden (in Fig. 3 nicht gezeigten) Führungsschiene geführt sind. In der Darstellung gemäß Fig. 3 sind die Fördergutträger 1 in einem Staubereich der Förderstrecke gestaut, wobei zur Bildung des Staus ein Stopperelement 29 in den Weg der Fördergutträger 1 eingebracht worden ist.

Mit Aktivierung des Stopperelementes 29 sind von einer (nicht gezeigten) Steuereinrichtung Mittel zur Änderung der Führungsbahn der Förderkette, nämlich Ablenk-Führungselemente 30 aktiviert worden, um die Kette 15 in den Bereichen S so in Richtung quer zur Förderrrichtung 28 von den betreffenden Fördergutträgern bzw. der Führungsschiene abzulenken und zu entfernen, dass die Bürstenelemente 17 an der Stelle S von ihrer Mitnahmebereitschaftsposition in die Mitnahmeumgehungsposition übergehen. Die Stellen S entsprechen den Orten, an denen im Staufall Anschlagbereiche 25 der Fördergutträger 1 liegen. Da die Fördergutträger 1 gleiche Längen aufweisen und an entsprechenden Stellen ihrer Längserstreckung die Anschlagbereiche 25 haben, sind die Stellen S relativ zu dem Stopperelement 29 bestimmt. In der Mitnahmeumgehungsposition kommen die Bürstenelemente 17 mit den gestauten Fördergutträgern 1 nicht in wirksamen Mitnahmeeingriff. Es kann vorgesehen sein, dass die in Mitnahmeumgehungsposition befindlichen Bürstenelemente 17 an den Stellen S überhaupt nicht mit den Fördergutträgern 1 in Berührung kommen. Die Vorteile der Erfindung werden aber auch dann noch erreicht, wenn es zu einer leicht nachgiebigen Berührung zwischen den Fördergutträgern 1 und den vordersten Endbereichen der Borsten kommt.

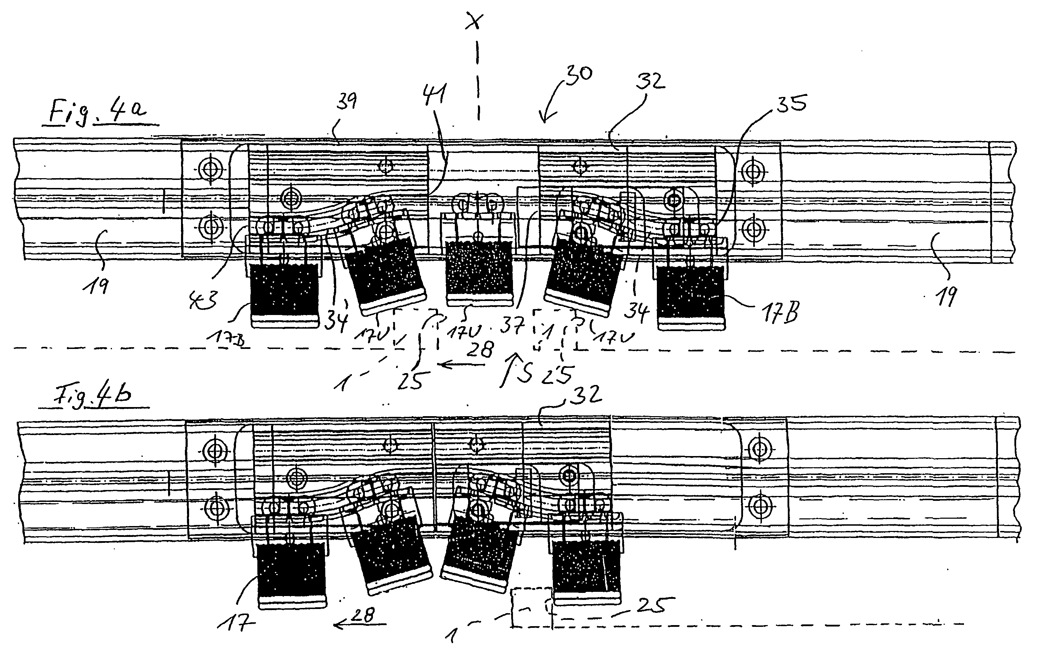

In Fig. 4a ist ein ein Ablenk-Führungselement 30 umfassender Bereich aus Fig. 3 vergrößert in entsprechender Draufsicht dargestellt. Das Ablenk-Führungselement 30 weist ein in Längsrichtung der Förderstrecke zwischen zwei Endstellungen geführt verschiebbares Schlittenelement 32 auf, welches eine Kettenumlenkführungsnut 34 enthält. Die Kettenumlenkführungsnut 34 liegt mit ihrem in Fig. 4a am rechten Ende des Schlittenelements 32 befindlichen Ketteneinlaufbereich 35 in Flucht mit der stationären Kettenführungsnut 19, welche die Antriebskette 15 in den Bereichen außerhalb der Ablenk-Führungselemente 30 führt. Ausgehend von dem Ketteneinlaufbereich 35 verläuft die Kettenumlenkführungsnut 34 in Fig. 4a nach links und dabei quer zur Förderrichtung 28 weg von den gestauten Fördergutträgern 1. Im Kettenauslaufbereich 37 am linken Ende des Schlittenelements 32 ist der Verlauf der Kettenumtenkführungsnut 34 wieder im Wesentlichen parallel zur Förderrichtung 28, jedoch versetzt zur stationären Kettenführungsnut 19. In Förderrichtung gegenüberliegend zu dem Schlittenelement 32 ist ein stationäres Umlenkelement 39 vorgesehen, welches eine Kettenumlenkführungsnut 34' aufweist, die in Bezug auf eine Mittenebene X zwischen den Elementen 32 und 39 spiegelsymmetrisch zu der Kettenumlenkführungsnut 34 verläuft, so dass der den Kettenauslauf 37 des Schlittenelementes 32 jeweils verlassende Kettenabschnitt näherungsweise geradlinig in den Ketteneinlauf 41 des Elements 39 einläuft, wobei die Kettenführungsnut 34' dann die Kette wieder in die stationäre Kettenführungsnut 19 führt. Die Kettenabschnitte, die jeweils in der stationären Führungsnut 19 oder in den damit fluchtenden Abschnitten der Kettenumlenkführungsnuten 34, 34' liegen, weisen in Mitnahmebereitschaftsposition befindliche Bürstenelemente 17 auf. Von den in Fig. 4a dargestellten Bürstenelementen befinden sich die äußeren Bürstenelemente 17B in Mitnahmebereitschaftsposition, wohingegen die drei dazwischen liegenden Bürstenelemente 17U von der Kettenführungsnut 34, 34' in Mitnahmeumgehungsposition geführt sind. Bei Weiterlaufen der Antriebskette 15 umgehen somit die Bürstenelemente 17 im Bereich S die Anschlagbereiche 25 der Fördergutträger 1, so dass es nicht zu Verschleiß verursachenden Auftreffstößen der Bürstenelemente 17 auf die gestauten Fördergutträger 1 kommt.

Soll nun der Stau der Fördergutträger 1 gemäß Fig. 3 aufgehoben werden, so wird das Stopperelement 29 gesteuert aus dem Weg der Fördergutträger 1 entfernt und es wird ferner die Phasenbeziehung zwischen den Stellen S und dem durch das Stopperelement 29 definierten vorderen Stauende dadurch aufgehoben, dass die (nicht gezeigte) Steuereinrichtung einen Verschiebeantrieb der Schlittenelemente 32 aktiviert, welcher das jeweilige Schlittenelement 32 von der Stellung gemäß Fig. 4a in die andere Endstellung gemäß Fig. 4b verschiebt. In der Stellung gemäß Fig. 4b kommen Bürstenelemente 17 mit Anschlagbereichen 25 der vorher gestauten Fördergutträger 1 in Mitnahmeeingriff, so dass die Fördergutträger 1 in Förderrichtung 28 transportiert werden. Die Förderrichtung kann gemäß einer Variante des Ausführungsbeispiels nach Fig. 1 bis Fig. 4b umkehrbar sein.

Gemäß einer Variante der Ausführungsform des Ablenk-Führungselements 30 nach Fig. 3 bzw. Fig. 4a, Fig. 4b kann es vorgesehen sein, dass auch das Element 39 in Förderrichtung steuerbar verschiebbar ist. Als Verschiebeantrieb für die Schlittenelemente 32 dient vorzugsweise eine pneumatische Kolben/Zylinder-Antriebsvorrichtung. Diese kann so gestaltet sein, dass sie simultan alle Schlittenelemente 32 eines Staubereichs von der einen Endstellung in die andere Endstellung verschiebt. Alternativ kann es vorgesehen sein, dass der Verschiebeantrieb für die Schlittenelemente 32 so ansteuerbar ist, dass er Schlittenelemente 32 eines Staubereichs mit Verzögerung nacheinander von der Endstellung gemäß Fig. 4a in die Endstellung gemäß Fig. 4b bewegt, beispielsweise um die im Stau unmittelbar aufeinander folgenden Fördergutträger 1 bei Verlassen des Staus voneinander zu separieren.

Den Kettenlängenausgleich beim Übergang von einer Endstellung des Schlittenelementes 32 in die andere Endstellung kann beispielsweise eine federnde Spannstation übernehmen.

## Patentansprüche

1. Fördereinrichtung, insbesondere Hängefördereinrichtung, mit Schienen (3) zur Führung von mit Laufrollen (9) ausgestatteten Fördergutträgern (1) längs einer Förderstrecke,
mit einem um Umlenkmittel umlaufend angetriebenen und zumindest bereichsweise mittels einer Führungseinrichtung (19) längs der Förderstrecke geführten Antriebsband (15) mit daran angeordneten und in einer Mitnahmebereitschaftsposition zur Mitnahme von schienengeführten Fördergutträgern (1) längs der Förderstrecke geeigneten und vorgesehenen Mitnehmerelementen (17) und
mit Mitteln (29) zum Stoppen von Fördergutträgern in einem Staubereich der Förderstrecke bei weiterlaufendem Antriebsband (15),
wobei die Fördereinrichtung gesteuert aktivierbare Positionsänderungsmittel (32) zur Überführung von Mitnehmerelementen (17) des Antriebsbandes (15) aus ihrer Mitnahmebereitschaftsposition in eine Mitnahmeumgehungsposition im Staubereich aufweist, wobei die in der Mitnahmeumgehungsposition befindlichen Mitnehmerelemente (17) mit gestauten Fördergutträgern (1) nicht oder ggf. nur schwach und leicht nachgiebig in Eingriff kommen können,
**dadurch gekennzeichnet,**
**dass** die Positionsänderungsmittel (30) steuerbare Mittel zur Änderung der Führungsbahn des Antriebsbandes (15) aufweisen, die dazu eingerichtet sind, das Antriebsband (15) in dem Staubereich der Förderstrecke wahlweise aus einer die Mitnehmerelemente in Mitnahmebereitschaftsposition führenden Bahn in eine die Mitnehmerelemente in Mitnahmeumgehungsposition führende Bahn umzulenken.

2. Fördereinrichtung nach Anspruch 1, wobei die Fördergutträger (1) Anschlagbereiche (25) aufweisen, die von Mitnehmerelementen (17) für die Mitnahmekopplung zwischen Fördergutträgern (1) und Antriebsband (15) zu beaufschlagen sind,
**dadurch gekennzeichnet,**
**dass** die Mittel zur Änderung der Führungsbahn im Staubereich längs der Förderstrecke in der Weise angeordnet und aktivierbar sind, dass sie das Antriebsband (15) an vorbestimmten Stellen in die die Mitnehmerelemente (17) in Mitnahmeumgehungsposition führende Bahn umlenken, wobei die vorbestimmten Stellen den Stellen entsprechen, an denen bei Stau von Fördergutträgern (1) die Anschlagbereiche (25) der gestauten Fördergutträger (1) liegen.

3. Fördereinrichtung nach Anspruch 1 oder 2,
**dadurch gekennzeichnet, dass** die Mittel zur Änderung der Führungsbahn Ablenk-Führungselemente (30) aufweisen, die das Antriebsband (15) lokal in eine die Mitnehmerelemente (17) in Mitnahmeumgehungsposition führende Bahn geführt ablenken, und dass die Ablenk-Führungselemente (30) in einem jeweiligen Verschiebebereich längs der Förderstrecke gesteuert verschiebbare Teile (32) umfassen, um den jeweiligen Ort der Ablenkung des Antriebsbandes (15) zu variieren.

4. Fördereinrichtung nach einem der vorhergehenden Ansprüche,
**dadurch gekennzeichnet, dass** die Mitnehmerelemente (17) elastisch nachgiebig auslenkbare Mitnehmerfinger aufweisen.

5. Fördereinrichtung nach einem der vorhergehenden Ansprüche,
**dadurch gekennzeichnet, dass** die Mitnehmerelemente (17) Bürstenelemente mit Mitnehmerborsten umfassen.

6. Fördergutträger nach einem der vorhergehenden Ansprüche,
**dadurch gekennzeichnet, dass** vereinzelte Mitnehmerelemente stets in Mitnahmebereitschaftsposition verbleiben.

## Claims

1. Conveying arrangement, in particular suspension-type conveying arrangement, having rails (3) for guiding conveyable-article carriers (1), equipped with running rollers (9), along a conveying route, having a drive belt (15) which is driven in circulation about diverting means, is guided along the conveying route, at least in certain regions, by means of a guide arrangement (19) and has driver elements (17) which are arranged on it and, in a driving position, are suitable, and envisaged, for driving rail-guided conveyable-article carriers (1) along the conveying route, and having means (29) for stopping conveyable-article carriers in a build-up region of the conveying route as the drive belt (15) continues running, it being the case that the conveying arrangement has position-changing means (32) which can be activated in a controlled manner and are intended for transferring driver elements (17) of the drive belt (15) from their driving position into a non-driving position in the build-up region, it being possible for the driver elements (17) located in the non-driving position, if appropriate, only to engage to a slight extent, if at all, and with easily yielding action with built-up conveyable-article carriers (1), **characterized in that** the position-changing means (30) have controllable means for changing the guide path of the drive belt (15) which are designed for diverting the drive belt (15) in the build-up region of the conveying route optionally from a path in which the driver elements are guided into the driving position into a path in which the driver elements are guided into the non-driving position.

2. Conveying arrangement according to Claim 1, the conveyable-article carriers (1) having stop regions (25) which may be subjected to the action of driver elements (17) for the driving coupling between conveyable-article carriers (1) and drive belt (15), **characterized in that** the means for changing the guide path in the build-up region are arranged, and can be activated, along the conveying route such that they divert the drive belt (15) at predetermined locations, into the path in which the driver elements (17) are guided into the non-driving position, the predetermined locations corresponding to the locations at which, in the event of a build-up of conveyable-article carriers (1), the stop regions (25) of the built-up conveyable-article carriers (1) are located.

3. Conveying arrangement according to Claim 1 or 2, **characterized in that** the means for changing the guide path have deflecting guide elements (30) which deflect the drive belt (15) locally in a guided manner into a path in which the driver elements (17) are guided into the non-driving position, and **in that** the deflecting guide elements (30), in a respective displacement region, comprise parts (32), which can be displaced in a controlled manner along the conveying route, in order to vary the respective location of the deflection of the drive belt (15).

4. Conveying arrangement according to one of the preceding claims, **characterized in that** the driver elements (17) have driver fingers which can be deflected with elastic yielding action.

5. Conveying arrangement according to one of the preceding claims, **characterized in that** the driver elements (17) comprise brush elements with driver bristles.

6. Conveying arrangement according to one of the preceding claims, **characterized in that** individual driver elements always remain in the driving position.

## Revendications

1. Dispositif de transport, en particulier dispositif de transport suspendu, avec des rails (3) destinés au guidage, le long d'une voie de roulage, de supports de matières à transporter (1) équipés de galets de roulement (9),
avec une bande d'entraînement (15) actionnée de manière à tourner autour de moyens de renvoi et guidée au moins par sections le long de la voie de roulage au moyen d'un dispositif de guidage (19), avec des éléments d'entraînement (17) disposés dessus, prévus et adaptés dans une position prête à l'entraînement en vue de l'entraînement de supports de matières à transporter (1) guidés sur rails le long de la voie de roulage, et
avec des moyens (29) destinés à l'arrêt de supports de matières à transporter dans une zone d'accumulation de la voie de roulage, alors que la bande d'entraînement (15) poursuit son chemin,
le dispositif de transport présentant des moyens de changement de position (32) activables de manière commandée, destinés au transfert d'éléments d'entraînement (17) de la bande d'entraînement (15) à partir de leur position prête à l'entraînement vers une position de dérivation d'entraînement dans la zone d'accumulation, les éléments d'entraînement (17) qui se trouvent dans la position de dérivation d'entraînement pouvant ne pas venir en prise avec des supports de matières à transporter (1) arrêtés de manière ou, le cas échéant, venir en prise uniquement faiblement et de manière à leur échapper facilement,
**caractérisé en ce que**
les moyens de changement de position (30) présentent des moyens commandables destinés à la modification de la voie de guidage de la bande d'entraînement (15), qui sont disposés dans le but de faire changer de direction la bande d'entraînement (15) dans la zone d'accumulation de la voie de roulage de manière sélective à partir d'une trajectoire guidant les éléments d'entraînement dans la position prête à l'entraînement vers une trajectoire guidant les éléments d'entraînement dans la position de dérivation d'entraînement.

2. Dispositif de transport selon la revendication 1, dans lequel les supports de matières à transporter (1) présentent des zones de butée (25) qui doivent être poussées par des éléments d'entraînement (17) pour le couplage d'entraînement entre les supports de matières à transporter (1) et la bande d'entraînement (15),
**caractérisé en ce que**
les moyens destinés à la modification de la voie de guidage sont disposés et activables le long de la voie de roulage dans la zone d'accumulation de sorte qu'ils font changer de direction la bande d'entraînement (15) à des emplacements prédéfinis dans la trajectoire guidant les éléments d'entraînement (17) dans la position de dérivation d'entraînement, les emplacements prédéfinis correspondant aux emplacements au niveau desquels les zones de butée (25) des supports de matières à transporter (1) arrêtés se situent, en cas d'accumulation de supports de matières à transporter (1).

3. Dispositif de transport selon la revendication 1 ou 2,
**caractérisé en ce que** les moyens destinés à la modification de la voie de guidage présentent des éléments de guidage de déviation (30) qui dévient la bande d'entraînement (15) localement dans une trajectoire guidant les éléments d'entraînement (17) dans la position de dérivation d'entraînement, et **en ce que** les éléments de guidage de déviation (30) comprennent des parties (32) coulissant de manière commandée le long de la voie de roulage dans une zone de coulissement correspondante dans le but de varier l'emplacement correspondant de la déviation de la bande d'entraînement (15).

4. Dispositif de transport selon l'une des revendications précédentes,
**caractérisé en ce que** les éléments d'entraînement (17) présentent des doigts d'entraînement pouvant être déviés de manière souple et élastique.

5. Dispositif de transport selon l'une des revendications précédentes,
**caractérisé en ce que** les éléments d'entraînement (17) comprennent des éléments du genre balai avec des brosses d'entraînement.

6. Dispositif de transport selon l'une des revendications précédentes,
**caractérisé en ce que** des éléments d'entraînement isolés restent toujours dans la position prête à l'entraînement.
